# EUROPEAN PATENT APPLICATION

(11) **EP 2 820 946 A1**
(43) Date of publication of application: **07.01.2015**
(21) Application number: 14187608.6
(22) Date of filing: 09.11.2010
(51) Int. Cl.: A01K 61/00

(54) **Device for singularization of fish**

(30) Priority: 09.11.2009 NO 20093302
(62) Divisional of application: 10834813.7
(71) Applicant: Maskon AS, 7500 Stjördal (NO)
(72) Inventor: Andresen, Halvard, 7500 Stjördal (NO); Eriksson, John, 7500 Meraaker (NO); Hägglund, Jörgen, 7520 Hegra (NO); Hammeren, Jon Egil, 7630 Aasen (NO); Kleven, Haavard, 7517 Hell (NO); Oppheim, Per Arne, 7632 Aasenfjord (NO); Vaagland, Frode, 7530 Meraaker (NO)
(74) Representative: Curo AS

(57) **Abstract**

Device for singularizing fish comprising a roll pair (8) rotating from each other and where fish to be singularized is supplied at one end (9) of the pair. The roll pair is slightly inclined and/or is provided with at least one water nozzle at the end (9) of the roll pair (8) where fish is supplied. Finally the invention also comprises a combination of the device for singularizing and the device for turning.

## Description

The present invention is related to a device which singularizes a continuous supplied flow of fish or a fish batch, according to the preamble of patent claim 1.

### Background

In the vast majority of plants for processing or handling fish, dead or alive, there is a need for orienting fish, both regarding abdomen/back and head/tail fin. Most of the systems for orienting fish require the fish to be supplied one by one, and this is usually performed in two separate systems, first singularizing and then turning. When the orientation of the fish has been given and the fish is supplied one by one, numerous handling and processing situations, which today is performed fully or partly manually, can be automated with a substantially increased speed and higher accuracy.

Both singularizing and orienting has been attempted in the past, but the systems have low speed and are large and expensive machines. US 5,115,903 discloses a system which utilizes optical solutions to turn the fish with regard to abdomen/back. The fish must have been singularized in advance. US 5,291,983 discloses another system for orienting fish head/tail fin, which uses photocells, and which thereafter sends the fish in different runs depending on orientation. This system does also disclose a system for singularizing the fish. There are several different systems for automatic turning of fish where the tail fin is guided into a groove/slit/recess or similar whereupon the fish is tilted around. An example of such a solution is given in US 4,557,020. The system assumes that the fish has been singularized in advance, and has limited capacity because of the design. The risk of harming the fish is also very high, since the fish is to be tilted in the air while it is held in the tail. There is also a system for orienting fish which is capable to swim, such as disclosed in US 4,051,952.

However, a substantial disadvantage of systems in prior art is that the fish must be of a given size. The systems will not work with substantially smaller or larger fish, so that the fish must be sorted by size, prior to singularizing and/or turning.

### Object

The main object of the present invention is to provide a device for singularizing a batch of fish and stretching it out so the fish thereafter is guided one by one. When needed, another object of the invention is to orient the fish with regard to abdomen/back, and that it should be flexible with regard to the direction. The invention should operate with high speed and not harm the fish. Moreover, it is an object that the invention operates independent of the size of the fish, so that there will be no need for sorting in advance. The invention can be a part of a supply system for further processing, such as vaccination, slaughtering, sorting with regard to quality and/or size, biomass measurements, sex determination, marking and similar.

### The invention

The object is achieved by a device according to the characterizing part of the independent claim 1. Further advantageous features appear from the accompanying dependent claims.

A device provides a uniform head/tail fin orientation of fish in a flow having random head/tail fin orientation, when the flow is supplied to the device. The device comprises a roll arranged transverse to the fish flow. The roll, in the following referred to as a turning roll, rotates with the flow and has a speed which at least corresponds to the velocity of the flow of fish being supplied. The roll can also constitute a part of a conveyor belt, such as the transversal end of a longer conveyor belt where the belt is attached around a roll, so that the part of the conveyor belt which performs the turning operation exhibits an approximately circular peripheral edge. The term "roll" or "turning roll" is in the following to be interpreted to comprise both a roll but also designs where the roll is covered by e.g. a conveyor belt. The roll surface has a smooth, plain pulley shape without openings, slits or similar which can accommodate the whole or parts of the fish. The term "pulley shape" is here meant to include both a surface without grooves, having a uniform smooth surface, and any form of grooves formed axially in the roll surface, such as a concave groove or a centered V-groove.

The fish supplied to the turning roll must have been disabled, such as anaesthetized or dead, but before rigor mortis. The fish should at least partly, be singularized in before being supplied to the turning roll, i.e. the fish should preferably not touch each other and it must be oriented lengthwise. The turning roll can be wide so that several fishes can pass at the same time side by side. The fish should be supplied with a minimum of water, but it should be wet.

Downstream of the turning roll, a receiving system is arranged to receive fish leaving the turning roll. This can have any design which will be obvious to a person skilled in the art, but must be designed to preserve the fish and avoid injuries during the turning operation. The term "injury" is meant to include both damage to the meat itself but also other life-weakening injuries, since the fish can be anaesthetized and is supposed to continue living after the treatment. Moreover, the system shall receive the fish in such a way that turning is not disturbed and that the head/tail fin orientation is preserved after turning.

To ensure that the fish is turned correctly, the fish is either supplied on top of the turning roll, or preferably before the top so that the fish follows the surface of the turning roll above the top. To avoid interfering with the turning, the receiving system shall be arranged with its uppermost end close to the turning roll, preferably between horizontal and vertical position, opposite the fish supply. In other words, the receiving system shall be retracted under the roll. In a preferred embodiment, the receiving system is formed as an arched groove or gutter, preferably formed like a ski jump where the uppermost part is substantially vertical and the lower part is substantially horizontal. The receiving system will collect the fish after it has left the turning roll without changing its orientation.

Different devices suitable for the following treatment, may be arranged downstream of the receiving system. Even though the fish has been singularized at least partly before it is supplied to the turning roll, larger fish can obtain higher speed in the receiving system and thereby creating a need for new singularizing or stretching of the fish mass after turning. This may for example be solved by guiding the fish into an acceleration or retardation belt after the receiving system, and optionally into a device for singularization.

When fish which is to be turned touches the turning roll, fish entering with the tail fin first will lay towards the surface of the turning roll beyond a horizontal center line of the turning roll, and be turned when it leaves the surface so that the head enters first into the receiving system. However, fish arriving with the head first leaves the surface of the turning roll before the center line and is not turned. Accordingly, all fish have their head first when they leave the turning roll. This can be explained by the fact the shape and area of the tail fin provides a suction effect which holds the fish onto the turning roll for a longer period of time than the suction effect obtained between the fish head and turning roll. There is no artificial suction but a natural capillary suction. In some cases, for fish to be slaughtered, a machine-created suction can be used to keep the tail fin for a sufficient period of time. This is because the tail fin is smaller than the fish body and because the fish, as such, is heavier. However, it is a premise that the fish has not entered rigor mortis and that is does not exhibit any substantial bending resistance. In the case where a machine-created suction is used, the turning roll is provided with small holes to direct the suction to the roll surface.

Moreover, the present invention comprises a device for length orienting and stretching a batch of fish having a random orientation, and then transporting the fish in a given direction during simultaneously singularization. This device can for example be located upstream of a device for head/tail fin orientation. The term singularization does here mean that a number of fish is scattered or separated so that they do not lie on top of each other and preferably that they lie in a mutual distance from each other. This device is in the following referred to as a singularization device. The singularization device comprises a pair of rolls where fish is supplied at one end and where the roll pair rotates in opposite senses with adjacent surfaces moving upwards, so that the fish is slightly lifted from the base. The fish is preferably supplied in a uniform flow, but can also be supplied batch wise. Some water is supplied with the fish so that the roll pair is wet and that there is a water film between the rolls and the fish.

The roll pair comprises two identical rolls which preferably are arranged adjacent to each other. They can also be arranged at a mutual distance, where the maximum distance between the rolls depends on the size of the fish to be singularized. The rolls have preferably a smooth and plain surface. In an alternative embodiment the surface of the rolls are formed with a helical elevation or recess, and the distance between the windings or rills in the spiral preferably increases in the transport direction. In this embodiment, both rolls shall have elevation or recess, but with a different orientation so that the windings/rills of the spiral rotates the same direction as the roll and the windings should slope away from each other, preferably in the direction of transportation.

To ensure that all fish supplied move in the same direction, the rolls can be arranged inclined so that the gravitation forces the fish to move forward. In an alternative embodiment the system can be provided with one or more nozzles at the rear end of the rolls, supplying additional directional water and "flush" thus the fish in a specific direction. It can also be a combination of these.

The combination of the directed force, water film and rotation speed of the roll pair causes the fish to orient lengthwise in the trough between the rolls, and singularizes during the transport, so that the fishes arrive one by one at the end of the roll pair. The water supply and/or the inclination of the roll pair affect the transport speed of the fish, and do thereby also affect the singularization of the fish flow. The length and radius of the roll pair should be in a certain relation to the size of the fish to be singularized, and has an indirect effect on the singularization. The length and radius of the rolls, and the mutual distance between the rolls should be varied in relation to the size of the fish to be singularized, since different rolls should be used when singularizing juvenile fish and fish for slaughtering. The same roll pair is used for handling all juvenile fish, so here is no need for any preceding sorting of the fish.

At the upstream end of the roll pair, fish will be in touch with each other and will lie fully or partly on top of each other. However, the lifting force from the rotating rolls will only affect the fish which are in touch with the rolls, and therefore only these fishes will obtain sufficiently reduced friction to be moved lengthwise. Fish lying on top of each other will always be a little displaced lengthwise, and fish lying on top of two fishes will push the fish located partly ahead in direction forwards and at the same time push fish located partly behind in direction backwards. Fish in touch with the rolls will be transported lengthwise, thus obtaining singularizing.

In an alternative embodiment the roll surface are, as mentioned above, provided with a helical elevation or recess, where the distance between the windings or rills increases in the direction of transport. In cases where these rolls are being used for singularization, the fishes will increase speed as they are transported downwards, in response to the increased distance between the windings/rills of the helical elevation/recess. This will result in increased singularization and distance between the fishes.

In one embodiment of the singularization device, a turning system is arranged at the end of the roll pair, in the opposite end of the fish supply, to turn the fish so that abdomen/back direction is defined. There are several prior art solutions available to obtain this, but in a preferred embodiment of the present invention it is used a detection device and two nozzles to supply water and/or air, one at each side of the roll pair, whereby both nozzles are arranged to flush towards the center of the roll pair. When the device detects abdomen/back direction, a signal is given to one of the nozzles to perform flushing, and then the fish is flushed/blown onto the side when it leaves the roll pair. Whether the abdomen is to be oriented to the right or left or whether all fish shall have the same orientation, can be adjusted by adding different conditions in the communication between the device and nozzle. The abdomen/back orientation can also be performed at a time, e.g. after the head/tail fin orientation.

When the fish leaves the roll pair in the singularization device in the embodiment described above, it has a given abdomen/back orientation and can be transferred onto the device for head/tail fin orientation. When the fish leaves the receiving system, it is both singularized and oriented abdomen/back and head/tail fin. If it is desirable to have larger distance between the fishes, a conveyor belt with higher speed may for example be arranged after the receiving system, which automatically will create larger distance between the fishes. This is obvious for a person skilled of the art.

In a particularly preferred embodiment, several different units are arranged in series, and provide a fast and reliable singularization and orientation of the fish. A batch of fish having a random orientation is supplied to the system upstream of a singularization device. Downstream of the singularization device, a device for orienting head/tail fin is arranged, which automatically turns fish lying in a certain direction, so that the fish is oriented uniformly after the turning operation. In a device for head/tail fin orientation as described above, fish in the receiving system will obtain a speed determined by the fish weight, and to prevent larger fish from touching smaller fish in the receiving system, fish is transferred to a retardation or acceleration system immediately after the receiving system so that each fish obtains identical speed. Then the fish is transferred to another singularization device for further singularization, and if desired the fish can be transferred to a system for abdomen/back turning. When fish leaves this system, it has been singularized and has a uniform head/tail fin orientation and optionally a given abdomen/back orientation.

In a method for singularizing according to the present invention, a batch of fish having a random orientation is guided into a device which performs length orientation of each fish, and stretches the batch and then transport the fish in a given direction with a simultaneous singularization. In a particularly preferred embodiment of the method, the device comprises a roll pair rotating in opposite senses with adjacent surfaces each moving upwards.

In another method, an at least partly singularized amount of fish is oriented with regard to head/tail fin. Fish having a random head/tail fin orientation is guided into a device for head/tail fin turning, where only fish having a given orientation is being turned, and fish having opposite orientation is not being turned. Thus, all fish leaving the device for head/tail fin orientation will have the same orientation. In a particularly preferred embodiment of the method, the head/tail fin device comprises a turning roll having a smooth and plain pulley shape.

### Example

The present invention is in the following described with reference to the accompanying figures, showing a preferred embodiment of the invention, where:
Figure 1 shows the device for head/tail fin turning, included for better understanding the invention,
Figure 2 and 3 are pictures of the device turning the fish, included for better understanding the invention,
Figure 4 shows the device for singularization in accordance with the invention, and
Figure 5 shows a preferred combination of the devices shown in Figure 1 and 4.

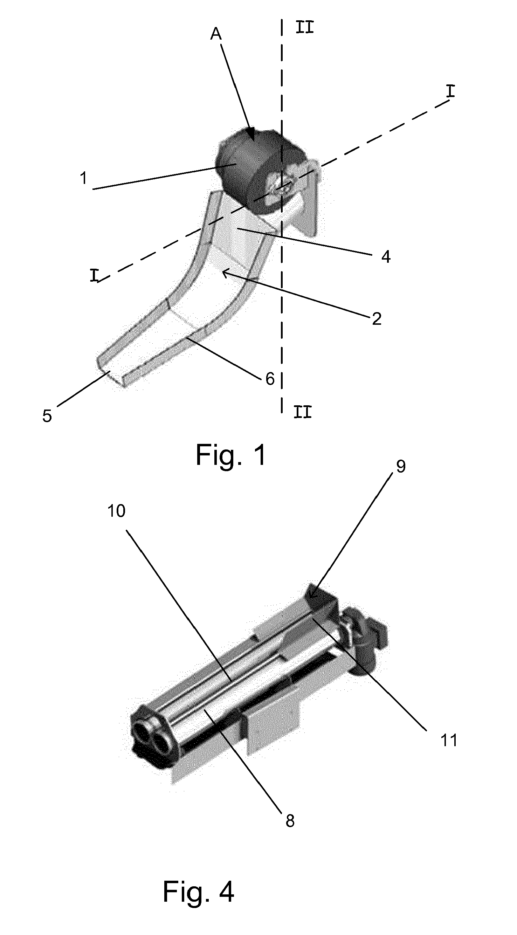

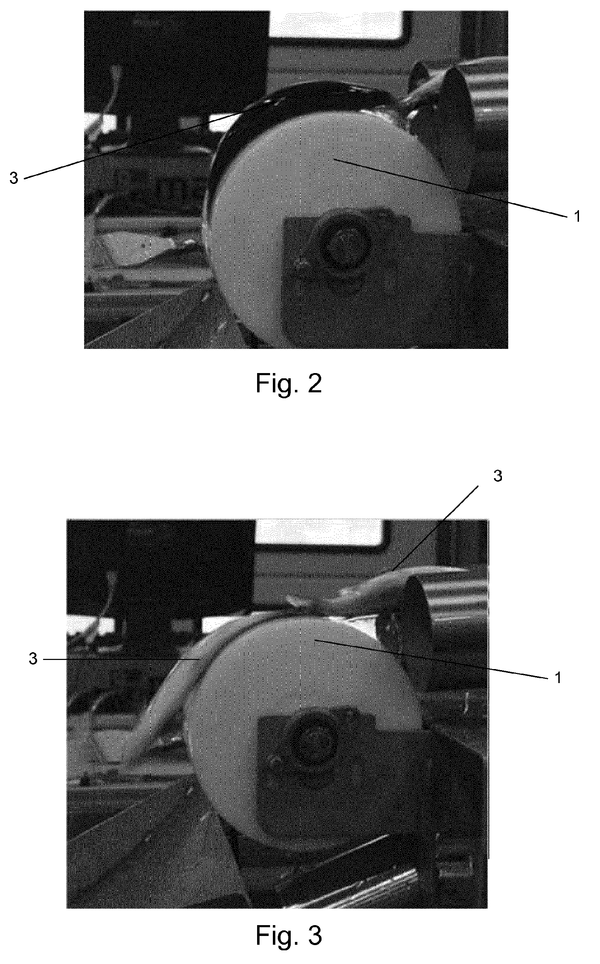

In Figure 1, a device for head/tail fin turning is showed, comprising a roll 1 which rotates in the flow direction, and a receiving system 2 which is retracted under the roll 1. Fish is supplied to the roll 1 before or at the uppermost point A. In Figure 2 it is shown that a fish 3 which arrives with the tail fin first, will follow the roll 1 almost 180 degrees, and when it leaves it will turn to arrive with the head first down into the receiving system 2 downstream of the roll. Figure 3 shows a case where a fish 3 arrives with the head first, and as seen from the figure, it will leave the roll 1 already after about 90 degrees and is therefore not turned, so that also this fish will arrive with its head first into the receiving system 2.

The receiving system 2 for fish which has passed the turning roll is placed immediately adjacent to the turning roll 1, between a horizontal I-I and vertical II-II center line. The receiving system 2 is formed as a gutter where the upstream end 4 is substantially vertical, and the downstream end 5 is substantially horizontal. This design protects the fish in a best possible manner, as it reduces/controls the way the fish fall from the roll 1 thus preventing the fish from being struck or hit which can cause damages or injuries.

The gutter has vertical side walls 6 and is tapering to simplify the transfer to a following conveyor belt which brings the fish onto further treatment, such as vaccination. Moreover, an accelerator conveyor creating further mutual distance between the fish can be provided, if desirable.

Figure 4 shows a device which singularizes the fish. This is preferably placed upstream of the roll 1 which turns the head/tail fin as shown in Figure 1-3. The device of Figure 4 comprises a roll pair 8 which is inclined, so that the end 9 where fish is supplied is more elevated. In the illustrated embodiment the roll pair has an inclination of about 4 degrees, but the device may also operate at an inclination between 0 and 10 degrees. The roll pair rotates from each other so that fish being transported down the trough 10 formed between the rolls is lifted somewhat up from the support. The inclination and the lift effect from the rotation of the roll pair 8 will in combination with the gravity on the fish force the fish to move downstream at the same time as it is being singularized.

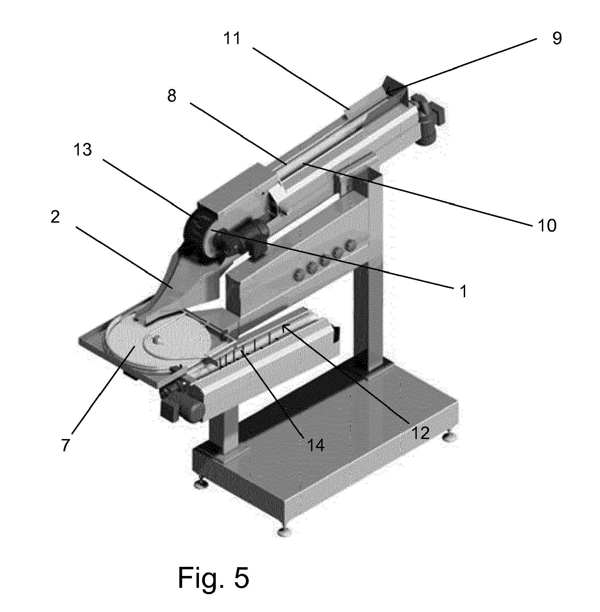

Figure 5 shows a particularly advantageous combination, where a device for singularization is located upstream of a head/tail fin turning, a circular retardation band 7 is located downstream of the head/tail fin turning, and a new singularization device 12 is located thereafter. At the upstream end 9, the device for singularization is performed with two supply plates 11 to guide supplied fish down towards the trough 10 between the rolls 8. At the opposite end of the rolls, the fish is guided out on a conveyor belt 13 which turns over a turning roll 1, and down into a receiving system 2. Large fish will obtain higher speed than small fish in the receiving system, and therefore the particularly advantageous shown combination in Figure 5 is performed with a retardation band 7 in the bottom of the receiving system. Because of space requirements the illustrated embodiment is shown with a circular conveyor belt, such as a rotating disc or similar, so that the fish also change direction while the speed is retarded. When the fish leave the retardation band 7 is has the same speed regardless of size.

After the retardation band 7 the fish is transferred to a new singularization device 12. In the shown embodiment the rolls in this roll pair are performed with helical elevations 14 on the surface. The windings in the elevations are tight upstream but have longer distance downwards. These elevations will increase the speed of the fish down the singularization device and increase the distance between the fish.

The description above has shown and described a preferred embodiment of the present invention. The figures and the example are only provided to illustrate an embodiment of the invention, and should by no means be interpreted as limiting to the scope of the invention as defined in the following patent claims.

## Claims

1. Device for singularizing fish, **characterized in that** it comprises a roll pair (8) which rotates away from each other and where fish which is to be singularized is supplied at one end (9) of the pair, whereby the roll pair is slightly inclined and/or is provided with at least one water nozzle at the end (9) of the roll pair (8) where fish is supplied.

2. The device of claim 1, **characterized in that** the roll pair (8) is inclined in the transport direction, whereby the end (9) where fish is supplied is elevated.

3. The device of claim 1 or 2, **characterized in that** water is supplied together with the fish.

4. The device of any one of claims 1 to 3, **characterized in that** the surface of the rolls (8) is provided with a helical elevation (14), where the distance between the windings increase in the transport direction.

5. The device of any one of claims 1 to 4, **characterized in that** the fish is supplied to a device for singularizing according to claim 5, whereafter the fish (3) is transferred to a device (1, 2, 4, 5, 6) for head/tail fin orienting.

6. The device of claim 5, **characterized in that** it comprises a further singularization device (12) located after the head/tail fin orientation.
